(19) Europäisches Patentamt
European Patent Office
Office européen des brevets

(11) EP 4 589 753 A1

(12) EUROPEAN PATENT APPLICATION

(43) Date of publication:
23.07.2025 Bulletin 2025/30

(51) International Patent Classification (IPC):
*H01M 50/46* (2021.01)

(21) Application number: 24216349.1

(22) Date of filing: 29.11.2024

(52) Cooperative Patent Classification (CPC):
H01M 50/461; H01M 10/0431

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.01.2024 KR 20240008598

(71) Applicant: Samsung SDI Co., Ltd.
Yongin-si, Gyeonggi-do 17084 (KR)

(72) Inventor: Youn, Jun Seong
16678 Suwon-si, Gyeonggi-do (KR)

(74) Representative: Gulde & Partner
Patent- und Rechtsanwaltskanzlei mbB
Berliner Freiheit 2
10785 Berlin (DE)

(54) **ELECTRODE ASSEMBLY, METHOD FOR MANUFACTURING THE SAME AND SECONDARY BATTERY COMPRISING THE SAME**

(57) Disclosed are an electrode assembly capable of increasing energy density while reducing or preventing stack imbalance using an uncoated portion, a method of manufacturing the same, and a secondary battery comprising the same. The electrode assembly includes a first electrode, a second electrode, and a separator between the first electrode and the second electrode, an outermost layer of the first electrode or the second electrode including an uncoated portion in which no active material is present, and on which there is an adhesive coating layer is bonded to the separator.

FIG. 5

# EP 4 589 753 A1

## Description

### 1. Field

Aspects of embodiments of the present disclosure relate to an electrode assembly, a method for manufacturing the same, and a secondary battery including the same.

### 2. Description of the Related Art

A secondary battery can be charged and discharged, unlike a primary cell that cannot be charged. Low-capacity secondary batteries may be used in small, portable electronic devices, such as smartphones, feature phones, notebook computers, digital cameras, and camcorders. High-capacity secondary batteries may be used as power sources for motors in hybrid and electric vehicles, and as power storage cells.

Generally, the secondary battery includes an electrode assembly that performs charging and discharging, and that includes a cathode, an anode, and a separator interposed therebetween. The electrode assembly may have a laminate structure in which pluralities of cathode plates and anode plates are stacked one above another, or may have a band-shaped wound structure of cathodes and anodes.

For example, a finishing tape formed with a bonding layer may be applied to an outer circumferential surface of the electrode assembly. However, the use of finishing tape may lead to poor stack balance. Moreover, the thickness of the finishing tape may pose a disadvantage due to limiting the amount of active material that can be added to the same thickness, and due to increased manufacturing costs due to the use of equipment for application.

Hence, there arises a desire for development of an electrode assembly that does not use a finishing tape.

### SUMMARY

The invention is defined by the appended claims. The description that follows is subjected to this limitation. Any disclosure lying outside the scope of said claims is only intended for illustrative as well as comparative purposes. According to aspects of embodiments of the present disclosure, there are provided an electrode assembly, which can secure good stack balance, good safety, and reduced thickness by eliminating the use of tape, a method of manufacturing the same, and a secondary battery including the same.

According to another aspect of embodiments of the present disclosure, there are provided an electrode assembly, which can realize high space efficiency and excellent energy density using a dead space as a bonding space, a method of manufacturing the same, and a secondary battery including the same.

The above and other aspects of the present disclosure will become apparent from the following description of some embodiments of the present disclosure.

One aspect of the present disclosure relates to an electrode assembly. The electrode assembly includes a first electrode, a second electrode, and a separator between the first electrode and the second electrode, an outermost layer of the first electrode or the second electrode including an unreacted region or an uncoated portion in which no active material is present, and on which there is an adhesive coating layer being bonded to the separator.

The separator may be at an outer periphery of the electrode assembly.

The unreacted region or the uncoated portion may be of an outermost anode.

The adhesive coating layer may include an adhesive binder.

The adhesive binder may have a viscosity of 2,000 cP or less at 25°C at a shear rate of 10 s$^{-1}$.

The adhesive binder may have an adhesive strength of 100 gf/25 mm to 2,500 gf/25 mm.

The adhesive binder may include at least one of cellulose, polyvinylidene fluoride-co-hexafluoropropylene, polyvinylidene fluoride-co-trichloroethylene, poly(methyl methacrylate), poly(butyl acrylate), polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethylcellulose, or polypropylene-maleic anhydride.

The adhesive coating layer may be discontinuous.

The adhesive coating layer may have an average thickness of 1 μm to 20 μm, and may have a thickness deviation of 0 μm to 3 μm.

An area of the adhesive coating layer may be 10% to 80% of an area of the outermost layer of the first electrode or the second electrode.

The electrode assembly may have a space utilization rate of 90% or more.

The electrode assembly may be wound in a jellyroll shape, and may include a wound end surface finished with the adhesive coating layer.

The electrode assembly may be free from an adhesive tape.

A secondary battery may include the electrode assembly.

A further aspect of the present disclosure relates to a method of manufacturing an electrode assembly. The method includes forming a laminate by stacking a first electrode, a second electrode, and a separator between the first electrode and the second electrode, an outermost layer of the first electrode or the second electrode including an unreacted region or an uncoated portion in which no active material is present, forming an adhesive coating layer on the uncoated portion or the unreacted region, and finishing the laminate such that the separator surrounds an outer periphery of the laminate while contacting the adhesive coating layer.

Forming the adhesive coating layer may include spraying or applying an adhesive binder.

The adhesive binder may have a viscosity of 2,000 cP or less at 25°C at a shear rate of 10 s$^{-1}$.

The adhesive binder may include at least one of cellulose, polyvinylidene fluoride-co-hexafluoropropylene, polyvinylidene fluoride-co-trichloroethylene, poly(methyl methacrylate), poly(butyl acrylate), polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethylcellulose, or polypropylene-maleic anhydride.

The adhesive coating layer may have an average thickness of 1 $\mu$m to 20 $\mu$m, and may have a thickness deviation of 0 $\mu$m to 3 $\mu$m.

The electrode assembly may be free from an adhesive tape.

Embodiments of the present disclosure provide an electrode assembly, and a method of manufacturing the same, in which an adhesive coating layer is formed in an uncoated portion on the outermost side of an electrode, and is attached to a separator at the outermost side, thereby securing good stack balance, good safety, reduced thickness through elimination of a tape while realizing high space efficiency and excellent energy density using a dead space as a bonding space.

According to a further aspect of the present disclosure, a secondary battery including the improved electrode assembly is provided.

## BRIEF DESCRIPTION OF THE DRAWINGS

The following drawings attached to this specification illustrate some embodiments of the present disclosure, and further describe aspects of the present disclosure together with the below detailed description of the present disclosure. However, the present disclosure should not be construed as being limited to the drawings:

FIG. 1A is a perspective view of a secondary battery according to one or more embodiments of the present disclosure;
FIG. 1B is a cross-sectional view taken along the line II-II in FIG. 1A;
FIG. 1C is an exploded perspective view of an electrode assembly of the secondary battery shown in FIG. 1A and FIG. 1B;
FIG. 2 is a longitudinal cross-sectional view of a secondary battery according to one or more other embodiments of the present disclosure;
FIG. 3 is an exploded view of a secondary battery according to one or more further embodiments of the present disclosure;
FIG. 4 is a schematic cross-sectional view of a typical electrode assembly;
FIG. 5 is a schematic cross-sectional view of an electrode assembly according to one or more embodiments of the present disclosure;
FIG. 6A is enlarged view of part A of FIG. 5;
FIG. 6B is enlarged view of part B of FIG. 5;
FIG. 7 is a perspective view of a battery module according to one or more embodiments of the present disclosure;
FIG. 8 is a perspective view of a battery pack according to one or more embodiments of the present disclosure;
FIG. 9 is a perspective view of the battery pack according to one or more embodiments of the present disclosure; and
FIG. 10 is a side view of a vehicle body and body parts according to one or more embodiments of the present disclosure.

## DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

Herein, the unreacted region means a region where the electrochemical reaction of an electrode active material does not occur. In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Further, the phrase "in a schematic cross-sectional view" means when a schematic cross-section taken by vertically cutting an object portion is viewed from the side. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

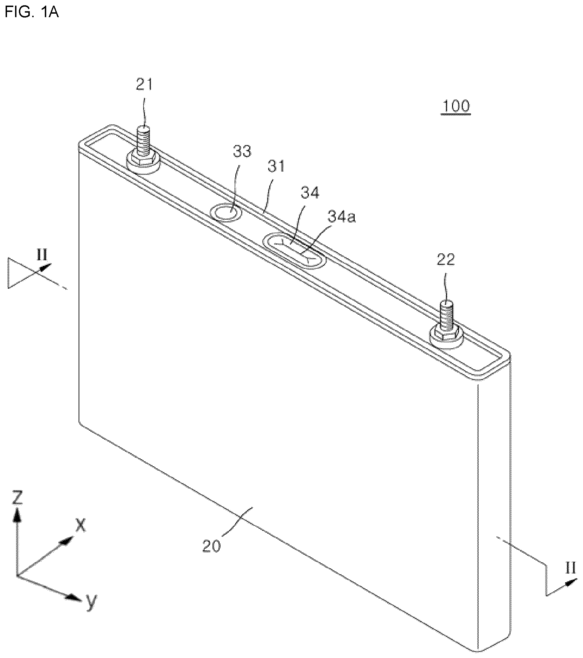

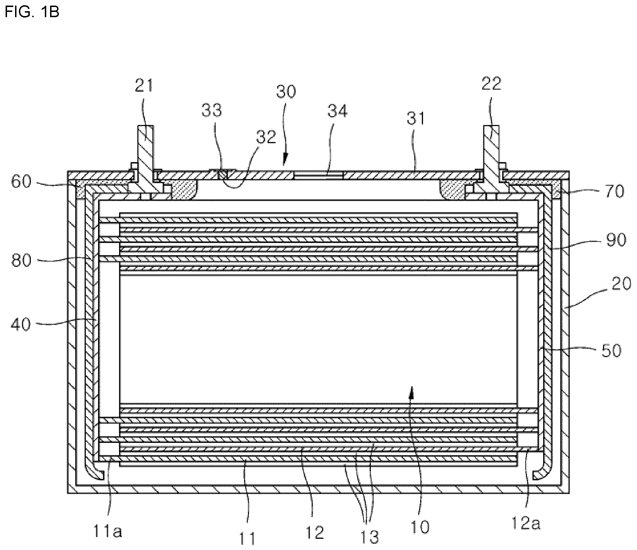

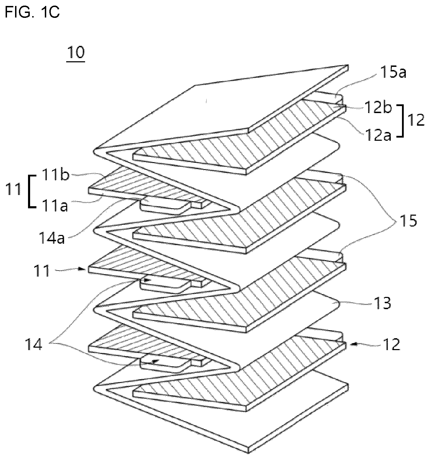

FIG. 1A is a perspective view of a secondary battery according to one or more embodiments of the present disclosure, FIG. 1B is a cross-sectional view taken along the line II-II in FIG. 1A, and FIG. 1C is an exploded perspective view of an electrode assembly of a secondary battery shown in FIG. 1A and FIG. 1B.

Referring to FIG. 1A and FIG. 1B, the secondary battery according to one or more embodiments of the present disclosure may include an electrode assembly 10, a first current collector 40, a first terminal 21, a second current collector 50, a second terminal 22, a case 20, and a cap assembly 30.

The electrode assembly 10 may be formed by winding or stacking a laminate of a first electrode plate 11, a separator 13, and a second electrode plate 12 formed in a thin plate or film shape. If the electrode assembly 10 is a wound laminate, a winding axis of the electrode assembly may be parallel to a longitudinal direction (e.g., y direction) of the case 20. The case 20 forms an overall appearance of the battery cell 100, and may be formed of a conductive metal such as aluminum, an aluminum alloy, or nickel-plated steel. In addition, the case 20 may provide a space in which the electrode assembly 10 is accommodated. The cap assembly 30 may include a cap plate 31 configured to cover the opening of the case 20, and the case 20 and the cap plate 31 may be made of a conductive material. Here, a terminal 21 electrically connected to the first electrode plate 11 or the second electrode plate 12 may be installed to protrude to the outside through the cap plate 31. In the cap plate 31, an electrolyte injection hole 32 in which a sealing cap 33 may be installed may be formed, and a vent 34 may be installed. The vent 34 may be provided with a notch.34a. In addition, an insulating member may be installed between the electrode assembly 10 and the cap plate 31. Here, the insulating member may include first and second lower insulating members 60 and 70, and each of the first and second lower insulating members 60 and 70 may be installed between the electrode assembly 10 and the cap plate 31. In addition, one end of a separation member, which may be installed to face one side surface of the electrode assembly 10, may be installed between the insulating member and the terminal 21. Here, the separation member may include first and second separation members 80 and 90. In one or more embodiments, the electrode assembly may be a stack type, rather than a wound type, and the present disclosure is not limited to a corresponding shape of the electrode assembly.

Referring to FIG. 1C, in one or more embodiments, the electrode assembly 10 may be a Z-stack electrode assembly in which the first electrode plate 11 and the second electrode plate 12 are inserted into respective sides of the separator 13, which is bent into a Z-stack. The present disclosure is not limited to a particular number of electrode assemblies, and the secondary battery may include one or more electrode assemblies received in a case and stacked such that long sides of the electrode assemblies are adjacent to each other. The first electrode plate 11 of the electrode assembly 10 may act as an anode, and the second electrode plate 12 may act as the cathode, or vice versa.

The first electrode plate 11 may have an active material layer 11b formed by applying a first electrode active material, such as graphite, carbon, and the like, to a first electrode collector plate 11a formed of metal foil, such as copper, copper alloys, nickel, or nickel alloys, and may include a first electrode tab (or first uncoated portion 14a) corresponding to a region to which the first electrode active material is not applied. The first electrode tab may act as a path for current flow between the first electrode plate and a first current collector. In some embodiments, the first electrode tab may be formed by pre-cutting the first electrode plate to protrude to one side upon fabrication of the first electrode plate, and may protrude farther to one side than the separator without additional cutting.

The second electrode plate 12 may have an active material layer 12b formed by applying a second electrode active material, such as a transition metal oxide, to a second electrode collector plate 12a formed of metal foil, such as aluminum or aluminum alloys, and may include a second electrode tab (or second uncoated portion 15a) corresponding to a region to which the second electrode active material is not applied. The second electrode tab may act as a path for current flow between the second electrode plate and a second current collector. In some embodiments, the second electrode tab may be formed by pre-cutting the second electrode plate to protrude to the other side upon fabrication of the second electrode plate, and may protrude farther to the other side than the separator without additional cutting.

In some embodiments, the first electrode tab 14 may be placed at a left end side of the electrode assembly, and the second electrode tab 15 may be located at a right end side of the electrode assembly. In one or more embodiments, both the first electrode tab 14 and the second electrode tab 15 may be located on the same surface in the same direction. Herein, the left side and the right side are set for convenience of description with reference to the secondary battery shown in FIG. 1C, and the locations thereof may be changed if the secondary battery is rotated left and right or up and down.

The first electrode tab 14 of the first electrode plate, and the second electrode tab 15 of the second electrode plate, are respectively placed at the opposite ends of the electrode assembly, as described above. In some embodiments, the electrode assembly may be received in a case together with an electrolyte. In the electrode assembly, the first current collector and the second current collector may be welded and connected to the first electrode tab of the first electrode plate and to the second electrode tab of the second electrode plate, which are respectively exposed at the opposite sides of the electrode assembly.

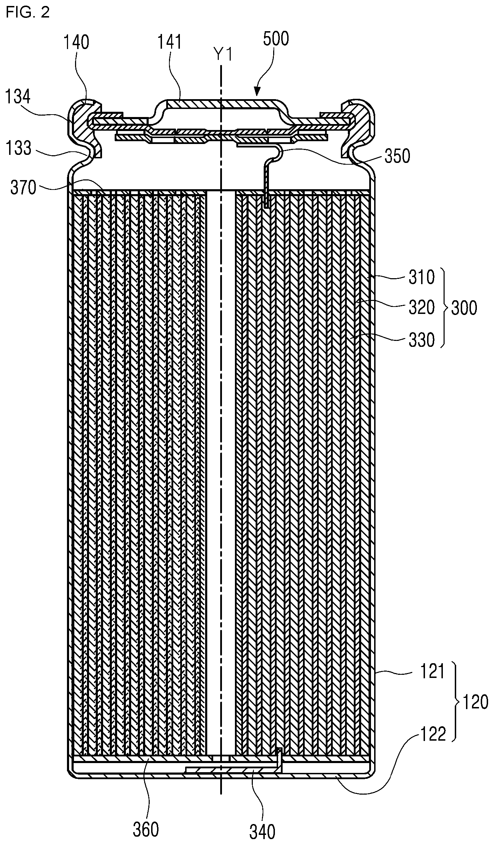

FIG. 2 is a longitudinal cross-sectional view of a secondary battery according to one or more other embodiments of the present disclosure.

Referring to FIG. 2, the secondary battery may include an electrode assembly 300, a case 120 that receives the electrode assembly and an electrolyte therein, a cap assembly 500 that is coupled at an opening in the case and that seals the case, and an insulating plate 370 interposed between the electrode assembly and the cap assembly within the case.

The electrode assembly 300 may include a first electrode 330, a second electrode 310, and a separator 320 interposed between the first electrode 330 and the second electrode 310, and may be wound in a jellyroll shape.

The first electrode 330 includes a first base, and a first active material layer formed on the first base. A first lead tab may extend outwardly from a first uncoated portion of the first base, in which the first active material layer is not formed, and may be electrically connected to the cap assembly.

The second electrode 310 includes a second base, and a second active material layer formed on the second base. A second lead tab may extend outwardly from a second uncoated portion of the second base, in which the second active material layer is not formed, and may be electrically connected to the case. The first lead tab and the second lead tab may extend in opposite directions from each other.

The first electrode 330 may act as a cathode. The first base may be formed of, for example, aluminum foil, and the first active material layer may include, for example, a transition metal oxide. The second electrode 310 may act as an anode. The second base may be formed of, for example, copper foil or nickel foil, and the second active material layer may include, for example, graphite.

The separator 320 serves to reduce or prevent the likelihood of a short circuit between the first electrode 330 and the second electrode 310 while allowing migration of lithium ions. The separator may be formed of, for example, a polyethylene film, a polypropylene film, a polyethylene-polypropylene film, or the like.

The case 120 receives the electrode assembly 300 and the electrolyte therein, and constitutes an external appearance of the secondary battery together with the cap assembly 500. The case 120 may include a substantially cylindrical body 121, and a bottom 122 connected to one side of the body 121. The body 121 may be formed with an inwardly recessed beading portion 133 and a crimping portion 134 bent inwardly at an end of an opening of the body 121. The case 120 may be formed of steel, a steel alloy, nickel-plated steel, a nickel-plated steel alloy, aluminum, an aluminum alloy, or an equivalent material thereto, without being limited thereto.

The beading portion 133 may inhibit movement of the electrode assembly 300 within the case, while facilitating seating of a gasket 140 and the cap assembly 500. The crimping portion 134 may press an edge of the cap assembly 500 through the gasket 140 to securely hold the cap assembly 500 in place.

The cap assembly 500 may be secured to the interior of the crimping portion through the gasket 140 to seal the case 120. The cap assembly 500 may include a cap-up 141, a safety vent, a cap-down, an insulating member, and a sub-plate, without being limited thereto.

The cap-up 141 may be located at the uppermost side of the cap assembly. The cap-up 141 may include a terminal convexly protruding upwardly to be connected to an external circuit, and a vent located around the terminal to vent a gas.

The safety vent may be located under the cap-up. The safety vent may include a protrusion convexly protruding downwardly to be connected to the sub-plate, and at least one notch located around the protrusion.

In the event of gas generation (e.g., due to overcharging or abnormal operation of the secondary battery), the protrusion may be deformed upwardly under pressure to be separated from the sub-plate, while the safety vent may be incised along the notch. The incised safety vent can reduce or prevent the likelihood of explosion of the secondary battery by venting the gas to the outside.

The cap-down may be located under the safety vent. The cap-down may include, or define, a first opening for exposing the protrusion of the safety vent, and a second opening for venting the gas. The insulating member may be located between the safety vent and the cap-down to insulate the safety vent and the cap-down.

The sub-plate may be located under the cap-down. The sub-plate may be secured to a lower surface of the cap-down to block the first opening of the cap-down, and the protrusion of the safety vent may be secured to the sub-plate. The first lead tab 350 withdrawn from the electrode assembly may be secured to the sub-plate, and the cap-up, the safety vent, the cap-down, and the sub-plate may be electrically connected to the first electrode of the electrode assembly.

The insulating plate 370 may be located to adjoin the electrode assembly 300 below the beading portion 133, and the insulating plate 370 may be provided with a tab opening to withdraw the first lead tab. The cap assembly 500, which is electrically connected to the first electrode by the first lead tab 350, may face the electrode assembly 300 with the insulating plate 370 located therebetween, and may be insulated from the electrode assembly 300 by the insulating plate 370.

It should be understood that the present disclosure is not limited thereto, and the case may have various shapes, such as a round shape or a pouch shape. The case may be formed of a metal, such as aluminum, an aluminum alloy, nickel-plated steel, and the like, or may be composed of a laminated film or a plastic film that forms the pouch.

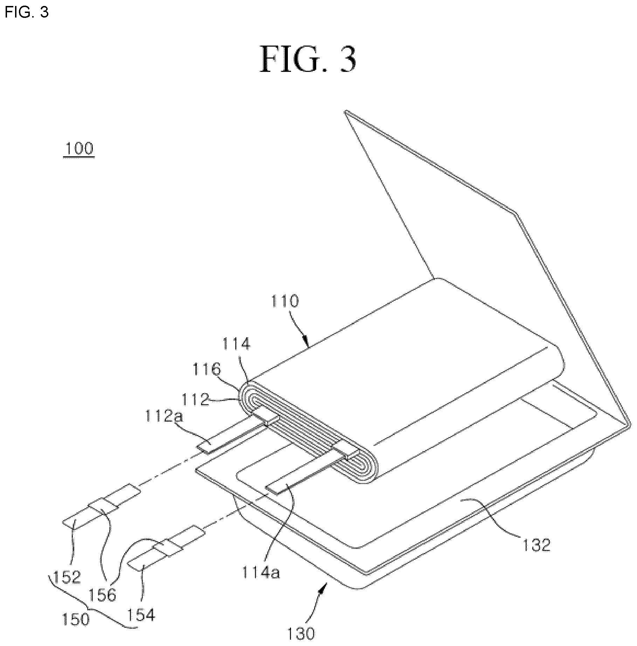

FIG. 3 is an exploded view of a secondary battery according to one or more other embodiments of the present disclosure.

Referring to FIG. 3, the secondary battery may include an electrode assembly 110, and a case 130 receiving the electrode assembly 110 therein. The electrode assembly 110 may be formed by stacking or winding a first electrode plate 112, a second electrode plate 114, and a separator 116 interposed between the first electrode plate 112 and the second electrode plate 114. The first electrode plate 112 may be a cathode, and the second electrode plate 114 may be an anode, or vice versa. If the first electrode plate 112 is a cathode, the first electrode plate 112 is formed by forming a first active material layer on both surfaces of a first current collector made of a thin sheet of a conductive metal sheet, for example, aluminum (Al) foil. A first electrode tab 112a is formed on a first uncoated portion of the first electrode plate 112 on which the first active material layer is not formed. The first electrode tab 112a is electrically connected at one end thereof to the first uncoated portion, and is withdrawn outwardly at the other end thereof from the case 130. An insulating tape 156 is attached to a region of the first electrode tab 112a contacting the case 130. If the second electrode plate 114 is an anode, the second electrode plate 114 is formed by forming a second active material layer on both surfaces of a second current collector made of a thin sheet of a conductive metal, for example, copper (Cu) foil or nickel (Ni) foil. A second electrode tab 114a is formed on a second uncoated portion of the second current collector on which the second active material layer is not formed. The second electrode tab 114a is electrically connected at one end thereof to the second uncoated portion, and extends outwardly at the other end thereof from the case 130. An insulating tape 156 is attached to a region of the second electrode tab 114a contacting the case 130. The separator 116 is interposed between the first electrode plate 112 and the second electrode plate 114 to reduce or prevent the likelihood of a short circuit between the first and second electrode plates 112, 114.

With the electrode assembly 110 received in the case 130, sealing portions 132 are brought into contact with each other along an edge of the case 130 to seal the case 130. The case 130 is sealed along the sealing portions 132, with the insulating tapes 156 interposed between the respective sealing portions 132. Referring to FIG. 3, the form of the insulating tape 156 attached to each of the first electrode tab 112a and the second electrode tab 114a is defined as a "detachable tab film" (such a sealing structure is defined as a detachable sealing structure).

It should be understood that the present disclosure is not limited thereto, and the case may have various shapes, such as a circular shape, a pouch shape, and the like. The case may be formed of a metal, such as aluminum, an aluminum alloy, nickel-plated steel, and the like, or may be composed of a laminated film or a plastic film that forms a pouch

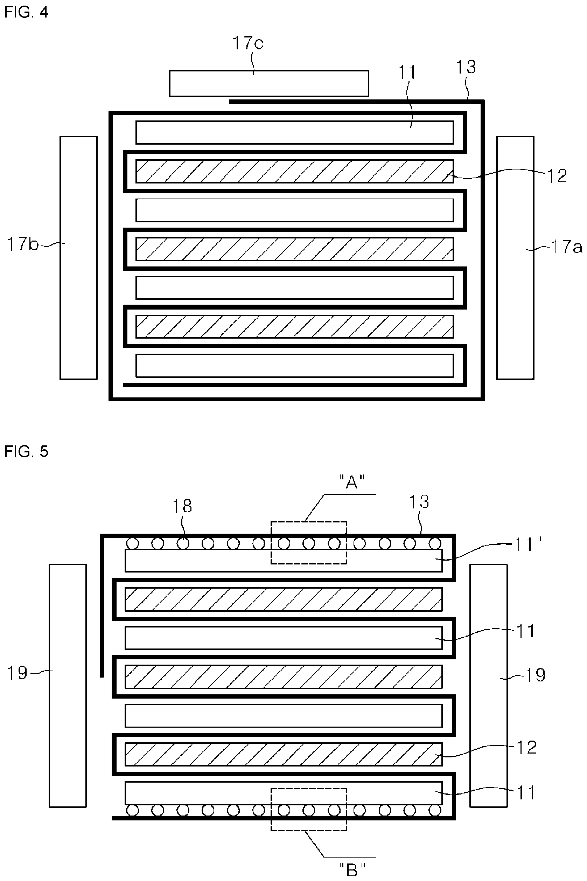

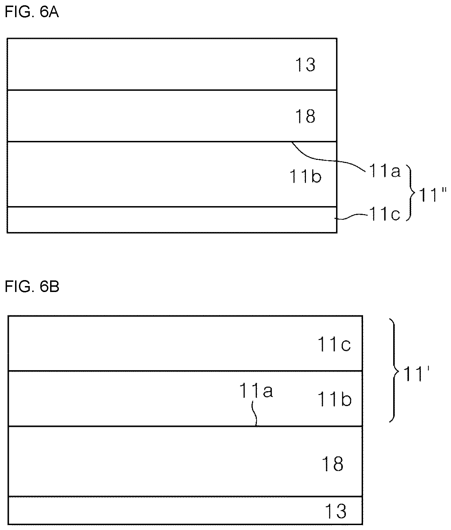

FIG. 5 is a schematic cross-sectional view of an electrode assembly according to one or more embodiments of the present disclosure, and FIGS. 6A and 6B are respectively enlarged views of parts A and B of FIG. 5.

Referring to FIG. 5, the electrode assembly 10 includes first electrodes 11, second electrodes 12, and separators 13 each interposed between the first and second electrodes. The first electrodes 11 and the second electrodes 12 are alternately stacked, and each separator 13 is interposed between the first electrode 11 and the second electrode 12 to reduce or prevent the likelihood of a short circuit. In FIG. 5, the first electrode 11 form an uppermost layer 11", and the second electrode 12 may form a lowermost layer 11', or vice versa. For example, in one or more embodiments, the anode may constitute the outermost layer, and in one or more other embodiments, the cathode may constitute the outermost layer. In one or more embodiments, the anode may constitute the uppermost layer 11", and the cathode may constitute the lowermost layer 11', or vice versa. The separator 13 extends farther than the first electrode 11 or the second electrode 12, and may be finished to surround an outer periphery of the electrode assembly.

Referring to FIG. 6A, the outermost layer 11" of the first electrode 11 includes an active material layer 11c formed on one surface of a base 11b, and an uncoated portion 11a or an unreacted region may be formed on the other surface of the base 11b in which no active material layer is present on the uncoated portion, while the active material is present in the unreacted region. An adhesive coating layer 18 is formed on the uncoated portion 11a or the unreacted region to be bonded to the separator 13 located at the outermost side. In one or more embodiments, the adhesive coating layer 18 may be formed on the uncoated portion 11a or the unreacted region of the outermost anode. If the outermost electrode is a cathode, the adhesive coating layer may be formed on the uncoated portion or the unreacted region of the outermost cathode.

Referring to FIG. 6B, the outermost layer 11' of the first electrode 11 may include an active material layer 11c formed on one surface of the base 11b, and an uncoated portion 11a or an unreacted region may be formed on the other surface of the substrate in which no active material layer is present on the uncoated portion 11a, while the active material is present in the unreacted region. An adhesive coating layer 18 is formed on the uncoated portion 11a or the unreacted region to be bonded to the separator 13 located at the outermost side.

The adhesive coating layer 18 may be formed by spraying or applying an adhesive binder. In some embodiments, the adhesive binder may be formed by spraying by a piezo-jetting method. The adhesive binder may have a viscosity (e.g., at 25°C) of 2,000 cP or less, for example 1,800 cP or less, 1,500 cP or less, or 700 cP to 1,300 cP at a shear rate of 10 s⁻¹. Within this range, the adhesive coating layer may stably attach target portions to each other, and may have good properties in terms of adhesion, coating uniformity, and energy density. The adhesive binder may have an adhesive strength of 100 gf/25 mm to 2,500 gf/25 mm, for example, 130 gf/25 mm to 2,000 gf/25 mm, 150 gf/25 mm to 1,000 gf/25 mm, or 150 gf/25 mm to 700 gf/25 mm. Within this range, the adhesive binder may exhibit good flowability and sprayability. The adhesive strength refers to peel strength (e.g., gf/25 mm), as measured by coating the adhesive binder between a polyethylene film and copper foil to bond the polyethylene film to the copper foil, followed by peeling the polyethylene film off of the copper foil at a peeling angle of 180° and at a peeling rate of 200 mm/min.

In some embodiments, the adhesive binder may include at least one selected from the group consisting of cellulose, polyvinylidene fluoride-co-hexafluoropropylene, polyvinylidene fluoride-co-trichloroethylene, poly(methyl methacrylate), poly(butyl acrylate), polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethylcellulose, or polypropylene-maleic anhydride. Within the above range, the adhesive binder can exhibit good properties in terms of coating uniformity and sprayability while securing good adhesion even with a thin thickness. As described above, the adhesive coating layer may be formed by applying a corresponding adhesive binder, thereby achieving significant reduction in bonding thickness while allowing an adhesive area to be formed only on a target region and securing good stack balance, and the adhesive coating layer does not need to be coated over the entire area and may be discontinuously formed only in a target region. For example, the adhesive coating layer may be formed in an area that is 10% to 80%, for example, 30% to 60%, of an area of the outermost layer of the electrode. Within this range, the adhesive coating layer can achieve desired adhesive effects by forming an adhesive region only in some area of the uncoated portion or the unreacted region without coating the entire area thereof. In some embodiments, the adhesive coating layer may have an average thickness of 1 μm to 20 μm, for example, 1.5 μm to 10 μm, and may have a thickness deviation of greater than 0 to 5 μm, for

example, 0.01 μm to 3 μm, or 0.05 μm to 1 μm. The adhesive coating layer can reduce or minimize a bonding thickness, as compared to a conventional adhesive tape, and can achieve an excellent space utilization rate.

Because the electrode assembly according to the embodiments may use at least one of the uncoated portion and the unreacted region as the adhesive coating layer, it is possible to realize both high space efficiency and good energy density. The electrode assembly may have a dead space of less than 10%, for example, less than 8%, less than 5%, or less than 3%.

The electrode assembly may be realized not only in a stack form, but also in a jellyroll form. The electrode assembly according to some embodiments may include an adhesive tape by forming the adhesive coating layer over a target region. For example, referring to FIG. 5, an adhesive region 19 may also be formed on a resin side of the electrode assembly, and may be formed by spraying or applying the adhesive binder.

Another aspect of the present disclosure relates to a method for manufacturing the electrode assembly. The method for manufacturing the electrode assembly according to one or more embodiments includes forming a laminate by stacking a first electrode 11, a second electrode 12, and a separator 13 interposed between the first electrode 11 and the second electrode 12, in which an outermost layer 11', 11" of the first electrode or the second electrode may include at least one of an unreacted region and an uncoated portion 11a in which no active material is present, and forming an adhesive coating layer on at least one of the uncoated portion 11a and the unreacted region. In some embodiments, the first electrode or the second electrode is stacked such that an uncoated portion 11a with no active material present thereon is located on the outermost layer 11', 11", and the method further includes forming an adhesive coating layer 18 on the uncoated portion, and further includes finishing the laminate such that the separator surrounds the outer periphery of the laminate while contacting the adhesive coating layer. In one or more embodiments, an unreacted region may be formed on an outer periphery of the outermost layer 11', 11" of the first electrode or the second electrode, and the adhesive coating layer may be formed in the unreacted region.

A further aspect of the present disclosure relates to a secondary battery including the electrode assembly as set forth above. The electrode assembly may be applied to any of prismatic, pouch, or circular secondary batteries. For description of the secondary battery, refer to the description of FIGS. 1 to 3.

Next, electrode materials according to embodiments of the present disclosure will be described in detail.

As a cathode material, a compound allowing reversible intercalation and deintercalation of lithium (lithiated intercalation compound) may be used. For example, the cathode material may be at least one complex oxide of a metal selected from among cobalt, manganese, nickel, and/or combinations thereof with lithium.

The composite oxide may be a lithium transition metal composite oxide. For example, the composite oxide may be a lithium nickel oxide, a lithium cobalt oxide, a lithium manganese oxide, a lithium iron phosphate compound, a cobalt-free nickel-manganese oxide, or a combination thereof.

By way of example, the composite oxide may be a compound represented by any of the following formulas: $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq \alpha \leq 1.8$, $0 \leq b \leq 0.5$, $0 \leq c \leq 0.5$, $0 < \alpha < 2$); $Li_aNi_bCo_cL^1_{d-}G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above formulas, A is Ni, Co, Mn, or a combination thereof; X is Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The cathode for the lithium secondary battery may include a current collector, and a cathode material layer formed on the current collector. The cathode material layer includes a cathode material, and may further include a binder and/or a conductive material.

The cathode material may be present in an amount of 90 wt% to 99.5 wt% based on 100 wt% of the cathode material layer, and each of the binder and the conductive material may be present in an amount of 0.5 wt% to 5 wt% based on 100 wt% of the cathode material layer.

The current collector may be Al, without being limited thereto.

The anode material includes a material allowing reversible intercalation/deintercalation of lithium ions, lithium metal, a lithium metal alloy, a material capable of being doped to lithium and de-doped therefrom, or a transition metal oxide.

The material allowing reversible intercalation/deintercalation of lithium ions may include a carbon-based anode material, for example, crystalline carbon, amorphous carbon, or a combination thereof. The crystalline carbon may include, for example, graphite, such as natural graphite or artificial graphite, and the amorphous carbon may include, for example, soft carbon, hard carbon, mesoporous pitch carbides, calcined coke, and the like.

The material capable of being doped to lithium and de-doped therefrom may be an Si-based anode material, or an Sn-based anode material. The Si-based anode material may be silicon, a silicon-carbon composite, $SiO_x$ ($0 < x < 2$), Si alloys, or combinations thereof.

The silicon-carbon composite may be a composite of silicon and amorphous carbon. According to one or more embodiments, the silicon-carbon composite may be prepared in the form of silicon particles having an amorphous carbon coating formed on the surface thereof.

The silicon-carbon composite may further include crystalline carbon. For example, the silicon-carbon composite may include a core containing crystalline carbon and silicon particles, and an amorphous carbon coating layer formed on the core.

The anode for the lithium secondary battery may include a current collector, and an anode material layer formed on the current collector. The anode material layer includes an anode material, and may further include a binder and/or a conductive material.

For example, the anode material layer may include 90 wt% to 99 wt% of the anode material, 0.5 wt% to 5 wt% of the binder, and 0 wt% to 5 wt% of the conductive material.

The binder may be a non-aqueous binder, an aqueous binder, a dry binder, or a combination thereof. If an aqueous binder is used as the binder, the binder may further include a cellulose compound capable of imparting viscosity.

The anode current collector may be selected from copper foil, nickel foil, stainless steel foil, titanium foil, nickel foam, copper foam, a conductive metal-coated polymer base, and combinations thereof.

The electrolyte for the lithium secondary battery may include a non-aqueous organic solvent and a lithium salt.

The non-aqueous organic solvent may act as a medium through which ions, which are involved in electrochemical reaction of a cell, can move.

The non-aqueous organic solvent may be a carbonate-based solvent, an ester-based solvent, an ether-based solvent, a ketone-based solvent, an alcohol-based solvent, a non-amphoteric solvent, or a combination thereof.

In use of the carbonate-based solvent, a mixture of a cyclic carbonate and a chained carbonate may be used.

Depending on the type of lithium secondary battery, a separator may be interposed between the cathode and the anode. For such a separator, polyethylene, polypropylene, polyvinylidene fluoride, or at least two layers thereof may be used.

The separator may include a porous substrate and a coating layer that includes an organic material, an inorganic material, or a combination thereof on one or both surfaces of the porous substrate.

The organic material may include a polyvinylidene fluoride polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or combinations thereof, without being limited thereto.

The organic material and the inorganic material may be present in a mixed state in one coating layer, or may be present in the form of a stack structure of a coating layer including the organic material and a coating layer including the inorganic material.

The battery according to the above may be used in manufacture of a battery pack.

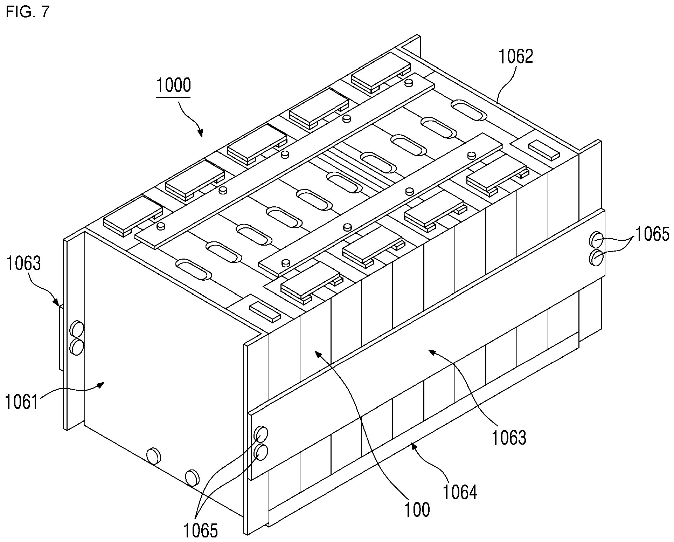

FIG. 7 is a perspective view of a battery module according to one or more embodiments of the present disclosure.

Referring to FIG. 7, a battery module 1000 may include multiple battery cells 100 arranged in one direction (including, for example, a lithium secondary battery illustrated in FIG. 1 to FIG. 3), and a housing 1061, 1062, 1063, 1064 in which the battery cells 100 are received.

The housing 1061, 1062, 1063, 1064 may include a pair of end plates 1061, 1062 facing wide surfaces of the battery cells 100, and side plates 1063 and a bottom plate 1064 for connecting the pair of end plates 1061, 1062 to each other. The side plates 1063 may support side surfaces of each of the battery cells 100, and the bottom plate 1064 may support a bottom surface of each of the battery cells 100. The pair of end plates 1061, 1062, the side plates 1063 and the bottom plates 1064 may be connected to one another by members, such as bolts 1065 or the like.

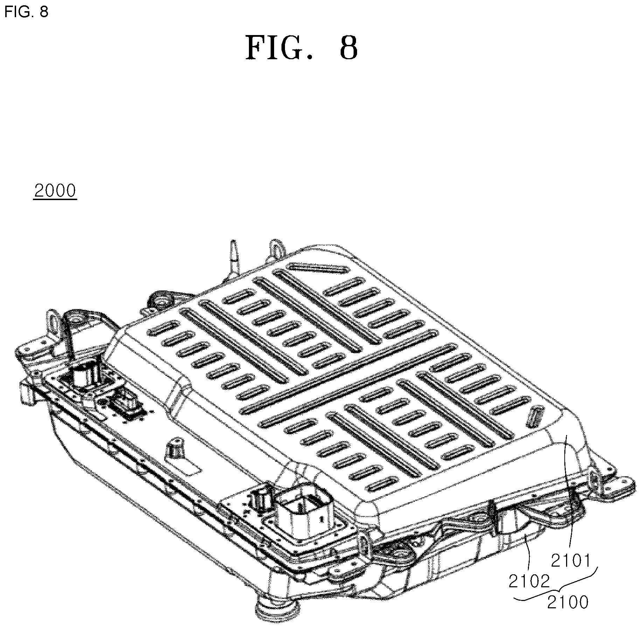

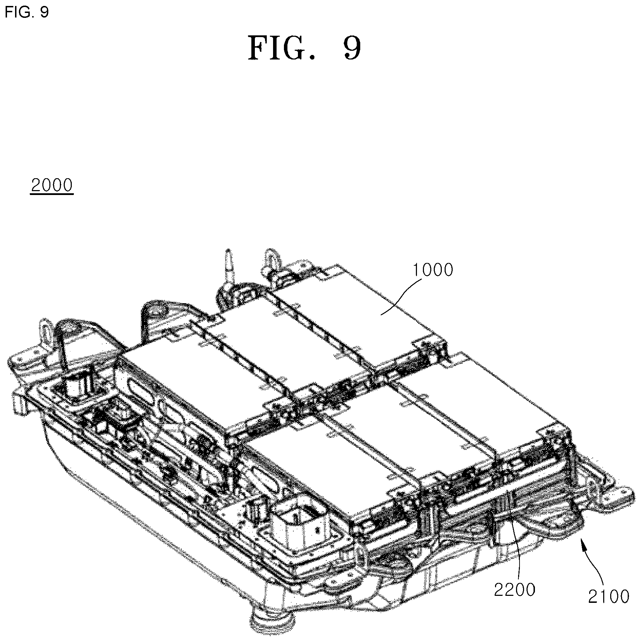

FIG. 8 is a perspective view of a battery pack according to one or more embodiments of the present disclosure. FIG. 9 is a perspective view of the battery pack according to one or more embodiments of the present disclosure.

Referring to FIG. 8 and FIG. 9, a battery pack 2000 according to one or more embodiments of the present disclosure includes an aggregate of individual batteries electrically connected to each other, and a pack case receiving the batteries. For convenience of illustration, components, such as a busbar, a cooling unit, and an external terminal for electrical connection of the batteries, are not described.

For example, the battery pack 2000 may include multiple battery modules 1000 (including, for example, the battery modules 1000 illustrated in FIG. 9), and a pack case 2100 receiving the battery modules 1000 therein. For example, the pack case 2100 may include first and second pack cases 2101, 2102 coupled to each other to face each other with the multiple battery modules 1000 interposed therebetween. The multiple battery modules 1000 may be electrically connected to each other through busbars 2200, and may be electrically connected to each other in a series/parallel or in a mixed series/parallel manner to achieve suitable electrical output.

The battery pack may be mounted on an automobile. The automobile may be, for example, an electric automobile, a hybrid automobile, or a plug-in hybrid automobile. The automobile may include a four-wheeled automobile or a two-wheeled automobile.

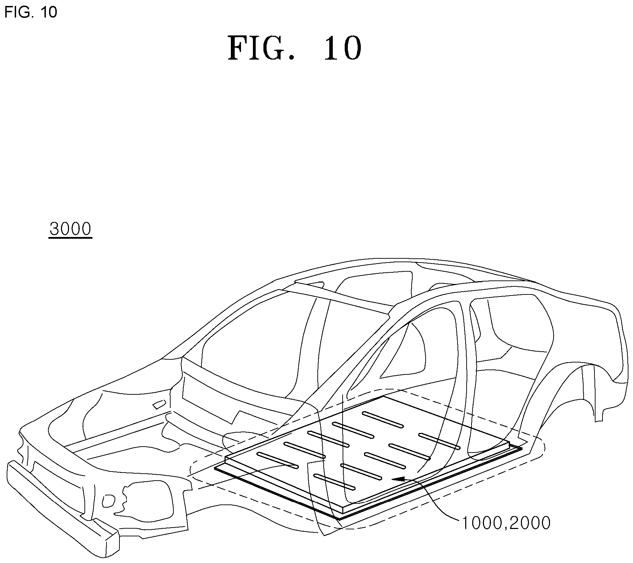

FIG. 10 is a side view of a vehicle body including the battery packs shown in FIGS. 8 and 9. Referring to FIG. 10, the automobile 3000 according to one or more embodiments includes the battery module 1000 according to one or more embodiments of the present disclosure, and/or the battery pack 2000 including the battery modules 1000. The automobile 3000 operates by receiving power from the battery module 1000 and/or the battery pack 2000 including the battery modules 1000 according to one or more embodiments of the present disclosure.

Next, the present disclosure will be described in more detail with reference to some examples. It should be noted that these examples are provided for illustration only and are not to be construed in any way as limiting the embodiments of the disclosure.

Referring to FIG. 5, in a first example (Example 1), a stack type electrode assembly was prepared by alternately stacking anodes and cathodes, with a separator between the anode and the cathode. The anodes were stacked as the uppermost and lowermost layers, and an adhesive coating layer was formed to a thickness of 20 $\mu$m or less on an unreacted region formed on the outermost layer by spraying an adhesive binder onto the unreacted region at a pressure of 0.35 MPa, in which the adhesive binder contained polyvinylidene fluoride-trichloroethylene and poly(methyl methacrylate) and had a viscosity of 1,010 cps and an adhesive strength of 150 gf/25 mm. The adhesive coating layer was compressed under a pressure of 8 kgf/cm$^2$ at 80°C for 10 minutes and was then attached to the separator, thereby preparing the electrode assembly.

Energy density and stack uniformity were measured on the prepared electrode assembly, and space utilization rate was calculated based on the thickness and a widthwise stacking method.

In a second example (Example 2), an electrode assembly was prepared in the same manner as in the previously described example, except that an adhesive binder having a viscosity of 3,510 cps was used and the adhesive coating layer was formed to a thickness of 30 $\mu$m.

Referring to FIG. 4, in a comparative example (Comparative Example), an electrode assembly was prepared in the same manner as the first described example (Example 1), except that a JR finishing tape 17a, 17b, 17c was used instead of the adhesive binder.

Results of property evaluation on the electrode assemblies prepared in Examples and Comparative Example are shown in Table 1.

Table 1

|  | Example 1 | Example 2 | Comparative Example |
|---|---|---|---|
| Energy Density (Wh/L) | 642.5 (1.6% increase) | 635.4 | 632.4 |
| Stack Uniformity | ○ | ○ | X |
| Adhesive Strength | 150 gf/25 mm | 250 gf/25 mm | 100 gf/25 mm |
| Space Utilization Rate (%) | 92.44 | 91.13 | 91.13 |

Referring to Table 1 above, with respect to Energy Density (e.g., Wh/L), energy density was obtained by dividing energy (e.g., Wh) of a secondary battery obtained under standard charge/discharge conditions (e.g., 0.5C charge/about 0.2C discharge) by the volume (L) of the secondary battery.

With respect to Stack Uniformity, stack uniformity was evaluated by checking the presence or absence of steps based on visual inspection. O indicates generation of no step, and X indicates generation of steps.

With respect to Adhesive Strength (e.g., gf/25 mm), adhesive strength was obtained by measuring pressure upon peeling a separator off of an electrode plate at a tensile rate of 200 mm/min.

With respect to Space Utilization Rate (%, S), space utilization rate was calculated according to Equation 1 below,

$$S = \frac{At - Dt}{At} \times 100$$

,

where At is the thickness (mm) of the electrode assembly, and Dt is the thickness (mm) of the dead space.

Referring to Table 1, it can be seen that the method of forming the adhesive coating layer according to the present disclosure secured better properties in terms of energy density, stack uniformity, adhesive strength, and utilization rate of dead space than the comparative example, in which an adhesive tape was used.

**Claims**

1.  An electrode assembly (10) comprising a first electrode (11), a second electrode (12), and a separator (13) between the first electrode (11) and the second electrode (12), an outermost layer (11', 11") of the first electrode (11) or the second electrode (12) comprising an unreacted region or an uncoated portion(11a) in which no active material is present, and an adhesive coating layer (18) disposed on the uncoated portion (11a) and being bonded to the separator (13).

2.  The electrode assembly (10) as claimed in claim 1, wherein the separator (13) is at an outer periphery of the electrode assembly (10).

3.  The electrode assembly (10) as claimed in claim 1 or 2, wherein the uncoated portion (11a) is of an outermost anode.

4.  The electrode assembly (10) as claimed in any one of the preceding claims, wherein the adhesive coating layer (18) comprises an adhesive binder.

5.  The electrode assembly (10) as claimed in claim 4, wherein the adhesive binder has an adhesive strength of 100 gf/25 mm to 2,500 gf/25 mm, measured by coating the adhesive binder between a polyethylene film and copper foil to bond the polyethylene film to the copper foil, followed by peeling the polyethylene film off of the copper foil at a peeling angle of 180° and at a peeling rate of 200 mm/min.

6.  The electrode assembly (10) as claimed in claim 4 or 5, wherein the adhesive binder comprises at least one of cellulose, polyvinylidene fluoride-co-hexafluoropropylene, polyvinylidene fluoride-co-trichloroethylene, poly(methyl methacrylate), poly(butyl acrylate), polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethylcellulose, and polypropylene-maleic anhydride.

7.  The electrode assembly (10) as claimed in any one of the preceding claims, wherein the adhesive coating layer (18) is formed discontinuous on the uncoated portion (11a).

8.  The electrode assembly (10) as claimed in any one of the preceding claims, wherein the adhesive coating layer (18) has an average thickness of 1 µm to 20 µm, and has a thickness deviation of 0 µm to 3 µm.

9.  The electrode assembly (10) as claimed in any one of the preceding claims, wherein an area of the adhesive coating layer (18) is 10% to 80% of an area of the outermost layer (11', 11") of the first electrode (11) or the second electrode (12).

10. The electrode assembly (10) as claimed in any one of the preceding claims, wherein the electrode assembly has a space utilization rate of 90% or more.

11. The electrode assembly (10) as claimed in any one of the preceding claims, wherein the electrode assembly (10) is wound in a jellyroll shape, and comprises a wound end surface finished with the adhesive coating layer (18).

12. The electrode assembly (10) as claimed in any one of the preceding claims, wherein the electrode assembly (10) is free from an adhesive tape.

13. A secondary battery comprising the electrode assembly (10) as claimed in claim 1.

14. A method for manufacturing an electrode assembly (10), the method comprising:

    forming a laminate by stacking a first electrode (11), a second electrode (12), and a separator (13) between the first electrode (11) and the second electrode (12), an outermost layer (11', 11") of the first electrode (11) or the second electrode (12) comprising an uncoated portion (11a) in which no active material is present;
    forming an adhesive coating layer (18) on the uncoated portion (11a); and
    finishing the laminate such that the separator (13) surrounds an outer periphery of the laminate while contacting the adhesive coating layer (18).

**15.** The method as claimed in claim 14, wherein forming the adhesive coating layer (18) comprises spraying or applying an adhesive binder.

FIG. 1A

FIG. 1B

FIG. 1C

FIG. 2

FIG. 3

# FIG. 3

FIG. 4

FIG. 5

FIG. 6A

FIG. 6B

FIG. 7

FIG. 8

# FIG. 8

FIG. 9

# FIG. 9

FIG. 10

# FIG. 10

3000

1000,2000

| | Europäisches Patentamt European Patent Office Office européen des brevets | **EUROPEAN SEARCH REPORT** | Application Number EP 24 21 6349 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2019 0055994 A (SAMSUNG SDI CO LTD [KR]) 24 May 2019 (2019-05-24) * paragraphs [0052] - [0075]; figures 3,4 * | 1,2,4-6, 8-15 | INV. H01M50/46 |
| | ----- | | |
| X | US 2020/028200 A1 (SAUERTEIG DANIEL [DE] ET AL) 23 January 2020 (2020-01-23) * paragraphs [0061] - [0066]; figures 2-6 * | 1,3,4, 6-15 | |
| | ----- | | |
| A | WO 2023/219285 A1 (LG ENERGY SOLUTION LTD [KR]) 16 November 2023 (2023-11-16) * figures 6,30 * | 1-15 | |
| | ----- | | |

| | | | TECHNICAL FIELDS SEARCHED (IPC) |
|---|---|---|---|
| | | | H01M |

The present search report has been drawn up for all claims

| Place of search | Date of completion of the search | Examiner |
|---|---|---|
| Munich | 20 May 2025 | Spingler, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 21 6349

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | Publication date | Patent family member(s) | | Publication date |
|---|---|---|---|---|
| KR 20190055994 A | 24-05-2019 | NONE | | |
| US 2020028200 A1 | 23-01-2020 | CN | 109792072 A | 21-05-2019 |
| | | DE | 102016218496 A1 | 29-03-2018 |
| | | EP | 3520163 A1 | 07-08-2019 |
| | | JP | 6788107 B2 | 18-11-2020 |
| | | JP | 2019530176 A | 17-10-2019 |
| | | KR | 20190055829 A | 23-05-2019 |
| | | US | 2020028200 A1 | 23-01-2020 |
| | | WO | 2018059972 A1 | 05-04-2018 |
| WO 2023219285 A1 | 16-11-2023 | CN | 118974987 A | 15-11-2024 |
| | | EP | 4478468 A1 | 18-12-2024 |
| | | JP | 2025511585 A | 16-04-2025 |
| | | KR | 20230157052 A | 16-11-2023 |
| | | WO | 2023219285 A1 | 16-11-2023 |

EPO FORM P0459

For more details about this annex : see Official Journal of the European Patent Office, No. 12/82